# EUROPÄISCHE PATENTSCHRIFT

(11) **EP 2 180 605 B1**
(45) Veröffentlichungstag und Bekanntmachung des Hinweises auf die Patenterteilung: **09.01.2013**
(21) Anmeldenummer: 09001235.2
(22) Anmeldetag: 29.01.2009
(51) Int. Cl.: H04B 7/155, H04W 52/02

(54) **Repeater und Verfahren zum Betrieb eines solchen Repeaters**
Repeater and method for operating such a repeater
Répétiteur et procédé d'utilisation d'un tel répétiteur

(30) Priorität: 27.10.2008 US 108693 P
(43) Veröffentlichungstag der Anmeldung: 28.04.2010
(73) Patentinhaber: Andrew Wireless Systems GmbH, 86675 Buchdorf (DE)
(72) Erfinder: Pischke, Arndt, 86685 Huisheim (DE); Kummetz, Thomas, Forest, Virginia 24551 (US)
(74) Vertreter: FDST Patentanwälte

(56) Entgegenhaltungen:
- EP-A2- 1 748 576
- EP-A2- 2 106 174
- US-A- 4 794 649
- US-A1- 2008 031 174
- US-A1- 2008 219 214

## Beschreibung

Die Erfindung bezieht sich auf einen Repeater zur Übertragung von Kommunikationssignalen in einem Funkübertragungsnetz. Die Erfindung bezieht sich weiterhin auf ein Verfahren zum Betrieb eines solchen Repeaters.

Ein Repeater dient im Zusammenhang mit einer Signalübertragung dazu, ein Signal aufzunehmen, gegebenenfalls aufzubereiten, und wieder auszusenden. Im Rahmen eines Mobilfunknetzes wird ein solcher Repeater beispielsweise dazu eingesetzt, ein Funksignal in ein für Funkwellen abgeschattetes Gebiet, wie etwa ein Gebäude, zu übertragen.

Dabei kommuniziert der Repeater einerseits mit einer - außerhalb des Gebäudes befindlichen - Basisstation des Mobilfunknetzes und andererseits gegebenenfalls mit einem - im Gebäude befindlichen - Mobilfunkendgerät (Mobiltelefon). Die Übertragungsrichtung von der Basisstation zu dem Mobilfunkendgerät wird hierbei als sogenannte "Downlink-Richtung" bezeichnet, während die Übertragung in umgekehrter Richtung von dem Mobilfunkendgerät zur Basisstation als "Uplink-Richtung" bezeichnet wird.

Bei Abwesenheit von Uplink-Signalen der Mobilfunkendgeräte ist es aus der WO 98/43371 A1 bekannt, einen Satelliten-Repeater zu Energiesparzwecken komplett in einen Standby-Modus zu versetzen, ihn also im Prinzip außer Betrieb zu setzen.

In Downlink-Richtung wird ein von der Basisstation am Repeater ankommendes Funksignal in der Regel immer im Gebäude (verstärkt) ausgesandt, gleichwohl sich das mit der Basisstation kommunizierende Mobilfunkendgerät im Gebäude oder außerhalb des Gebäudes befindet. Befindet sich das entsprechende Mobilfunkendgerät außerhalb des Gebäudes, sind Personen, die sich im Gebäude aufhalten, somit unnötigerweise einer von dem Repeater ausgehenden elektromagnetischen Strahlung ausgesetzt. Um Forderungen nach weniger elektromagnetischer Strahlungsbelastung ("Elektrosmog") nachzukommen, sollen solche unnötigen Strahlungsquellen möglichst eliminiert werden.

Aus der US 2008/0249214 A1, der US 2008/0031174 A1, der EP 1 748 576 A2, der US 4,794,649 A und der EP 2 106 174 A2 sind Repeater bekannt, die in einen Energiesparmodus mit verminderter Abstrahlleistung geschaltet werden können.

Weiter sind aus der US 5,200,955 A und der EP 0 806 847 A2 Repeater bekannt, die zur Übertragung von Kommunikationssignalen nach den Zeitmultiplexverfahren eingerichtet sind, wobei aktive Zeitscheiben der Übertragung festgestellt werden, und wobei die Repeater abhängig von der Feststellung aktiver Zeitscheiben betrieben werden.

Der Erfindung liegt die Aufgabe zugrunde, einen Repeater anzugeben, bei dessen Betrieb möglichst wenig elektromagnetische Strahlung emittiert wird. Der Erfindung liegt weiterhin die Aufgabe zugrunde, ein möglichst strahlungsarmes Betriebsverfahren anzugeben.

Bezüglich des Repeaters wird diese Aufgabe erfindungsgemäß gelöst durch die Merkmale des Anspruchs 1. Danach ist grundsätzlich ein Repeater zur Übertragung von Kommunikationssignalen zwischen einer Basisstation und einem Netzendgerät eines Funkübertragungsnetzes, insbesondere eines Mobilfunknetzes, vorgesehen, der einen Sender umfasst, welcher dazu eingerichtet ist, die Kommunikationssignale zu dem Netzendgerät auszusenden. Als Kommunikationssignale sind dabei insbesondere solche Signale bezeichnet, die über den Repeater hinweg, also zwischen der Basisstation und dem Netzendgerät des Funkübertragungsnetzes übertragen werden. Weiterhin umfasst der Repeater einen Sensor zur Detektion eines Schaltsignals, sowie eine Steuereinheit, die dazu ausgebildet ist, den Sender abhängig von dem Schaltsignal zwischen einem passiven und einem aktiven Betriebszustand umzuschalten. Dabei ist die Sendeleistung des Senders in dem passiven Betriebszustand geringer als in dem aktiven Betriebszustand. Der passive Betriebszustand umfasst dabei insbesondere auch den Fall, dass der Sender abgeschaltet ist, die Sendeleistung also "auf Null" reduziert ist. Im aktiven Betriebszustand ist dagegen die Sendeleistung ausreichend hoch, um Kommunikationssignale, wie beispielsweise ein Telefongespräch, störungsfrei zu übertragen.

Hierbei ist in dem aktiven Betriebszustand ein Ausstrahlen der Kommunikationssignale durch den Repeater bzw. den Sender erwünscht, während in dem passiven Betriebszustand ein Ausstrahlen der Kommunikationssignale zumindest teilweise unterdrückt werden soll. Das Schaltsignal kennzeichnet dabei eine Randbedingung, anhand derer durch die Steuereinheit entschieden wird, ob der Sender in den aktiven oder in den passiven Betriebszustand zu versetzen ist. Dabei ist insbesondere vorgesehen, dass sich der Sender im Normalfall zunächst in dem passiven Betriebszustand befindet, und nur dann in den aktiven Betriebszustand versetzt wird, wenn ein geeignetes Schaltsignal detektiert wird. Der Sender wird somit nur bei Bedarf in den aktiven Betriebszustand versetzt.

Da die Sendeleistung des Senders im passiven Betriebszustand gegenüber dem aktiven Betriebszustand reduziert ist, bzw. umgekehrt ausgedrückt, da der Repeater nur im aktiven Betriebszustand mit "voller" Sendeleistung sendet, werden Personen, die sich in der Umgebung des Repeaters aufhalten, einer vergleichsweise geringeren elektromagnetischen Strahlendosis ausgesetzt als bei einem ununterbrochen bei voller Sendeleistung ausstrahlenden Repeater. Zudem wird durch die reduzierte Sendeleistung vorteilhafterweise der Energieverbrauch des Repeaters reduziert.

Bevorzugt ist der Repeater dazu eingesetzt, die Kommunikationssignale in einen Innenraum, insbesondere ein Gebäude oder ein Verkehrsmittel zu übertragen. In diesem Fall dient der Repeater vorteilhafterweise als Strahlungsfilter für das Gebäude bzw. das Verkehrsmittel, da die Funksignale nur im aktiven Betriebszustand bei voller Sendeleistung in das Gebäude bzw. das Verkehrsmittel übertragen werden.

Es ist alternativ dazu allerdings auch denkbar, dass der Repeater im Freien, wie etwa zur Signalübertragung in einen Tunnel, eingesetzt ist. In diesem Fall dient das Umschalten in den passiven Betriebszustand hauptsächlich zum Energiesparen.

Gemäß der Erfindung ist der Repeater als sogenannter Multiband-Repeater zur Übertragung von Kommunikationssignalen unterschiedlicher Frequenzbänder ausgebildet. Dabei ist der Sensor dazu ausgebildet, für jedes Frequenzband separat jeweils ein Schaltsignal zu detektieren. Die Steuereinheit ist dazu ausgebildet, den Sender abhängig von dem jeweils zugeordneten Schaltsignal für jedes Frequenzband separat zwischen dem aktiven und dem passiven Betriebszustand umzuschalten. Insbesondere kann der Sender dabei für jedes Frequenzband eine eigene Sendeeinheit umfassen, die jeweils separat durch die Steuereinheit angesteuert wird.

Dabei ist vorgesehen, Kommunikationssignale eines "aktiven" Frequenzbandes bei zur störungsfreien Übertragung ausreichend hoher Sendeleistung auszusenden, während Kommunikationssignale eines "passiven" Frequenzbandes demgegenüber mit (stark) reduzierter Sendeleistung übertragen werden. Insbesondere ist dabei vorgesehen, dass der Sender bezüglich der einzelnen Frequenzbänder normalerweise im passiven Betriebszustand betrieben wird und nur bei Bedarf bezüglich des entsprechenden Frequenzbandes in den aktiven Betriebszustand versetzt wird.

Als Schaltsignal ist in diesem Zusammenhang insbesondere ein von einem in der Umgebung des Repeaters befindlichen Netzendgerät ausgehendes Uplink-Signal vorgesehen, anhand dessen das zugehörige Frequenzband identifiziert wird. Bezüglich des identifizierten Frequenzbandes wird der Sender dann im aktiven Betriebszustand betrieben, während er bezüglich nicht identifizierter Frequenzbänder - weiterhin - im passiven Betriebszustand betrieben wird. Anders ausgedrückt fungiert der Repeater in diesem Fall als Filter für das oder die jeweils benötigten Frequenzbänder, da er nur dann für diese in dem aktiven Betriebszustand betrieben wird, wenn diese auch identifiziert sind. Diese Ausführungsform stellt eine vergleichsweise einfach zu implementierende Möglichkeit dar, einen strahlungsarmen Repeater zu realisieren.

Zusätzlich ist der Repeater bevorzugt dazu eingerichtet, die Kommunikationssignale nach einem Zeitmultiplexverfahren in zeitlich sequentiell aufeinanderfolgenden Zeitscheiben zu übertragen, wobei der Sensor dazu ausgebildet ist, für einzelne Zeitscheiben separat jeweils ein Schaltsignal zu detektieren. Dabei sind die einzelnen Zeitscheiben jeweils spezifischen Netzendgeräten zugeordnet. Die Steuereinheit ist dazu ausgebildet, den Sender abhängig von dem jeweils zugeordneten Schaltsignal für einzelne Zeitscheiben separat zwischen dem aktiven und dem passiven Betriebszustand umzuschalten. Die Steuereinheit ist hier also dazu ausgebildet, den Sender derart anzusteuern, dass nur die Kommunikationssignale bestimmter Zeitscheiben übertragen werden, während die Kommunikationssignale anderer Zeitscheiben - im passiven Betriebszustand - nicht oder nur mit reduzierter Sendeleistung weitergeleitet werden. Hierdurch ist es insbesondere möglich, nur die Zeitscheiben, die einem spezifischen Netzendgerät zugeordnet sind, bei voller Sendeleistung zu übertragen. Dabei ist wiederum vorgesehen, dass der Repeater die einzelnen Zeitscheiben normalerweise bei reduzierter Sendeleistung - im passiven Betriebszustand - überträgt, und nur bei Bedarf die Zeitscheiben spezifischer Netzendgeräte - im aktiven Betriebszustand - bei höherer Sendeleistung überträgt. Durch diese Ausführungsform ist es möglich, die Sendeleistung des Repeaters besonders bedarfsgerecht anzupassen, und somit die von dem Repeater ausgehende Strahlung bis auf ein Minimum zu reduzieren.

Insbesondere ist in diesem Zusammenhang der Sensor dazu ausgebildet, die Kommunikationssignale zu beobachten und somit einzelne Zeitscheiben einem spezifischen Netzendgerät zuzuordnen. In diesem Fall dient also bevorzugt das Kommunikationssignal selbst als Schaltsignal.

Vorzugsweise ist der Sensor dazu ausgebildet, ein Funksignal, insbesondere ein von dem Netzendgerät ausgehendes Uplink-Signal, als Schaltsignal zu detektieren.

In einfacher Ausführungsform ist der Sensor dabei dazu ausgebildet, ein sogenanntes "Location-Update-Signal" eines Netzendgeräts als Schaltsignal zu identifizieren. Das Location-Update-Signal eines Netzendgeräts dient dazu, den Standort des Netzendgeräts innerhalb des Funkübertragungsnetzes festzustellen, und wird daher normalerweise von jedem Netzendgerät ausgesandt. In diesem Fall ist vorgesehen, dass der Repeater immer dann in den aktiven Betriebszustand versetzt wird, wenn sich ein - eingeschaltetes - Netzendgerät, insbesondere Mobilfunkendgerät, in seiner näheren Umgebung befindet.

Zusätzlich oder alternativ ist der Sensor dazu ausgebildet, eine sogenannte IMSI ("International Mobile Subscriber Identity")-Attach oder -Detach-Prozedur als Schaltsignal zu erkennen. Jedem Netzteilnehmer ist eine IMSI-Nummer zugeordnet. Wird ein Netzendgerät eingeschaltet, so meldet es sich mittels der IMSI-Attach-Prozedur, bei der unter anderem die IMSI-Nummer übertragen wird, bei der nächstliegenden Basisstation des jeweiligen Funkübertragungsnetzes an. Somit kann das dabei von dem Netzendgerät ausgehende Uplink-Signal als Schaltsignal herangezogen werden, aufgrund dessen der Sender in den aktiven Betriebszustand versetzt werden soll. Umgekehrt meldet sich das Netzendgerät beim Abschalten über die IMSI-Detach-Prozedur bei dem Funkübertragungsnetz ab, so dass die dabei ausgesandten Signale als Schaltsignal zum Umschalten in den passiven Betriebszustand dienen. Dabei ist insbesondere vorgesehen, dass die Steuereinheit dazu ausgebildet ist, den Sender erst nach Abmeldung des letzten in seiner Umgebung befindlichen Netzendgeräts in den passiven Betriebszustand zu versetzten. Bevorzugt umfasst daher die Steuereinheit eine Untereinheit, die auf einem sogenannten "IMSI-Catcher" basiert. Durch diese hat der Repeater die Möglichkeit, sich als Basisstation auszugeben, und somit die IMSI-Nummern aller erreichbaren Netzendgeräte zu protokollieren.

In einer vorteilhaften Ausführungsform basiert der Sensor auf einem sogenannten RSSI ("Received Signal Strength Indication")-Detektor, mit welchem normalerweise die Signalstärke eines Funkkanals identifiziert wird.

In einer Weiterbildung der Erfindung ist der Sensor als ein Decoder ausgebildet, der dazu eingerichtet ist, die zwischen der Basisstation und dem Netzendgerät ausgetauschten Kommunikationssignale als Schaltsignal zu detektieren.

Damit können die Kommunikationssignale selektiv einzelnen Netzendgeräten zugeordnet werden, so dass hierdurch eine besonders intelligente Ansteuerung des Senders möglich ist, woraus eine besonders geringe Strahlungsemission resultiert.

Diese Ausführungsform ist insbesondere mit einer Datenübertragung nach dem Zeitmultiplexverfahren relevant. In diesem Fall können beispielsweise die Kommunikationsdaten analysiert, und einzelne (Downlink-)Zeitscheiben einzelnen Netzendgeräten zugeordnet und dementsprechend nur bei Bedarf in den aktiven Betriebszustand versetzt werden.

In einer weiteren Ausführungsform der Erfindung ist der Sensor zur Detektion einer Lichtintensität ausgebildet. In diesem Fall fungiert die Lichtintensität als Schaltsignal, wobei Helligkeit mit dem aktiven Betriebszustand korrespondiert, während Dunkelheit mit dem passiven Betriebszustand korrespondiert.

Diese Ausführungsform des Repeaters ist im Zusammenhang mit einem Mobilfunknetz insbesondere für Schlafräume vorgesehen, da hier eine reduzierte elektromagnetische Strahlenbelastung besonders erwünscht ist. Insbesondere kann dabei bei Dunkelheit der Repeater - zumindest bezüglich seiner Sendefunktion - komplett abgeschaltet sein. Bevorzugt ist dann eine Kopplung der Steuereinheit an einen Rauchmelder oder eine andere Alarmfunktion des Gebäudes vorgesehen, um bei einem Notfall eine Funkverbindung mit dem Mobilfunkendgerät zu ermöglichen.

Im Zusammenhang mit einem Repeater im Freien ist in dieser Ausführungsform eine Kopplung des Repeaters an die Straßenbeleuchtung denkbar.

In weiteren bevorzugten Ausführungsformen ist der Sensor als Schallsensor zur Detektion eines akustischen Signals, als Bewegungsmelder oder als Beschleunigungssensor ausgebildet. Dabei dient ein detektiertes Geräusch, eine detektierte Bewegung in der Umgebung des Repeaters oder eine detektierte (Eigen)Beschleunigung bzw. - Bewegung des Repeaters jeweils als Schaltsignal, das mit dem aktiven Betriebszustand korrespondiert. Eine Beschleunigung des Repeaters könnte beispielsweise auf ein Erdbeben hinweisen, so dass in diesem Fall eine einwandfreie Verbindung zur Übertragung eines Notrufes über den Repeater notwendig ist.

Insbesondere im Zusammenhang mit einem mobilen Repeater, der zur Übertragung in ein Verkehrsmittel, beispielsweise einen Zug, dient, ist bevorzugt vorgesehen, dass der Sensor zur Detektion einer Position (des Repeaters bzw. des zugordneten Verkehrsmittels) eingerichtet ist. Die Positionsbestimmung kann beispielsweise durch ein GPS (Global Positioning System) realisiert werden. Durch Vergleich der ermittelten Position / Koordinaten mit einer Datenbank kann dann das entsprechende Schaltsignal zugeordnet werden. Wird beispielsweise festgestellt, dass sich ein Zug in einem Bahnhof befindet, kann diese Position als Schaltsignal herangezogen werden, um den zugeordneten Repeater bzw. Sender in den passiven Betriebszustand zu versetzen. Im Bahnhof ist davon auszugehen, dass die Funksignale in Downlink-Richtung auch ohne weitere Verstärkung im Zug ausreichend stark sind, so dass vorteilhafterweise eine zusätzliche elektromagnetische Strahlenbelastung im Zug durch den (mobilen) Repeater vermieden werden kann. Ebenfalls im Zusammenhang mit dem mobilen Repeater ist alternativ oder zusätzlich vorgesehen, dass der Sensor dazu ausgebildet ist, eine Bewegung oder Beschleunigung des Repeaters bzw. des zugeordneten Verkehrsmittels zu detektieren. Hierfür kann beispielsweise ein "Zughalt"-Signal, welches von einem Zugsystem zur Verfügung gestellt wird, oder der Stillstand der Räder des Zuges (wiederum im Bahnhof), als Schaltsignal zum Umschalten in den passiven Betriebszustand herangezogen werden.

Ebenfalls im Zusammenhang mit dem mobilen Repeater ist vorzugsweise vorgesehen, dass abhängig von dem jeweiligen Schaltsignal nicht nur der Sender in Downlink-Richtung in den passiven oder aktiven Betriebszustand versetzt wird, sondern entsprechend auch ein Sender für die Signale in Uplink-Richtung (abhängig von dem gleichen Schaltsignal) in einen passiven oder aktiven Betriebszustand versetzt wird. Dabei wird vorzugsweise wiederum im passiven Betriebszustand die Sendeleistung (in Uplink-Richtung) um etwa 10 bis 20 dB gegenüber dem aktiven Betriebszustand reduziert. Damit wird vorteilhafterweise verhindert, dass ein Uplink-Rauschen des (Zug-)Repeaters die Empfindlichkeit der Basisstation reduziert.

In einer weiteren Ausführungsform der Erfindung ist der Repeater als sogenanntes "Distributed Antenna System" (DAS) ausgebildet. In diesem Fall umfasst der Repeater eine Mastereinheit, sowie mehrere Remote-Units, die jeweils mit der Mastereinheit kommunizieren. Die Mastereinheit steht dabei mit der Basisstation des Funkübertragungsnetzes in Verbindung, während die Remote-Units zur Kommunikation mit dem Netzendgerät vorgesehen sind. Insbesondere sind dabei die einzelnen Remote-Units in einem Gebäude verteilt. Jede der Remote-Units umfasst jeweils einen Sensor zur Detektion eines Schaltsignals, sowie jeweils einen Sender zur Übertragung der Kommunikationssignale. Dabei ist die Steuereinheit dazu ausgebildet, abhängig von dem jeweils zugeordneten Schaltsignal jeden Sender separat zwischen dem passiven Betriebszustand und dem aktiven Betriebszustand umzuschalten. Vorteilhafterweise kann hierdurch in jedem Gebäudeteil separat die Strahlungsemission dem Bedarf entsprechend reduziert werden.

Optional ist jede Remote-Unit jeweils mit einer Steuereinheit zur Umschaltung des jeweils zugeordneten Senders versehen.

Alternativ oder zusätzlich ist der Repeater als ein sogenannter TDD-Repeater ausgebildet, der dazu eingerichtet ist, die Kommunikationssignale nach einem "Time-Division-Duplex"-Verfahren zeitlich abwechselnd in einer Uplink-Richtung von dem Netzendgerät zur Basisstation und in einer Downlink-Richtung von der Basisstation zu dem Netzendgerät zu übertragen.

Insbesondere zur Übertragung von größeren Datenmengen, wie beispielsweise Bildern, ist dabei ein sogenannter asymmetrischer Datenverkehr vorgesehen, bei dem die Zeitscheiben in Uplink- und Downlink-Richtung entsprechend der Hauptübertragungsrichtung unterschiedlich groß sind. Ist dabei ein Uplink-Signal des Netzendgeräts als Schaltsignal für den Sender vorgesehen, wird dieser nur dann in den aktiven Betriebszustand versetzt, wenn ein Uplink-Signal detektiert wird. Um dabei zu vermeiden, dass der Sender in den passiven Betriebszustand umgeschaltet wird, wenn über einen längeren Zeitraum nur in Downlink-Richtung gesendet wird, und dementsprechend kein Uplink-Signal detektiert werden kann, ist die Steuereinheit insbesondere dazu ausgebildet, den Sender nach dem Umschalten in den aktiven Betriebszustand erst nach einer vorgegebenen, insbesondere variabel programmierbaren, Haltezeit wieder in den passiven Betriebszustand zu versetzen. Dabei ist die Haltezeit - insbesondere abhängig von einem jeweiligen Mobilfunkstandard - derart zu wählen, dass die längst mögliche Zeit ohne ein Uplink-Signal bei einer Datenverbindung überbrückt wird.

Im Zusammenhang mit einer zeitlich wechselweisen Datenübertragung nach dem TDD-Verfahren ist zweckmäßigerweise vorgesehen, dass das Umschalten in den aktiven Betriebszustand maximal etwa 5% der sogenannten "burst length" des Uplink-Signals beträgt, dass also die Zeit zum Umschalten maximal etwa 5% der zeitlichen Länge einer Uplink-Zeitscheibe beträgt. Hierdurch werden Signalverluste beim Umschalten von dem passiven in den aktiven Betriebszustand vermieden.

Zweckmäßigerweise ist vorgesehen, dass die Steuereinheit zur Umschaltung zwischen dem aktiven und dem passiven Betriebszustand über eine Schaltfunktion verfügt, die einerseits ausreichend kurz bzw. schnell ist, um den Downlink-Datenverkehr nicht zu stören, die andererseits aber lang bzw. langsam genug ist, um eine Verbreiterung des Frequenzspektrums des Downlink-Datenverkehrs weitestmöglich zu unterbinden.

Vorzugsweise ist die Steuereinheit dazu ausgebildet, den Sender im passiven Betriebszustand bei einer um etwa 10-20 dB gegenüber dem aktiven Betriebszustand reduzierten Sendeleistung zu betreiben. Insbesondere im Zusammenhang mit einem Mobilfunknetz ist die Sendeleistung des Repeaters dann im passiven Betriebszustand zwar zur störungsfreien Übertragung von Kommunikationssignalen zu gering, jedoch noch ausreichend hoch, dass beispielsweise ein Kontaktsignal der Basisstation zu dem Mobilfunkendegerät übertragen werden kann. Dadurch bleibt das Mobilfunkendgerät in Kontakt mit der Basisstation, und muss diese nicht "suchen".

Vorteilhafterweise ist die Steuereinheit dazu ausgebildet, den Sender im passiven Betriebszustand bei einer Sendeleistung zu betreiben, die bis auf ein minimales Sendesignal, ein sogenanntes "beacon signal", das zur Erkennung ausreichend ist, reduziert ist. Wiederum im Zusammenhang mit einem Mobilfunknetz ist dabei insbesondere vorgesehen, dass der Repeater bei minimaler Sendeleistung ein - dem jeweiligen Mobilfunkstandard entsprechendes - Kontaktsignal der Basisstation nachahmt, so dass das Mobilfunkendgerät scheinbar mit der Basisstation in Kontakt bleibt. Wiederum wird dadurch vermieden, dass das Mobilfunkendgerät die Basisstation suchen muss.

Bezüglich des Verfahrens wird obige Aufgabe erfindungsgemäß gelöst durch die Merkmale des Anspruchs 11. Danach ist vorgesehen, dass beim Betrieb eines Repeaters, wobei dieser in einem Funkübertragungsnetz Kommunikationssignale von einer Basisstation an ein Netzendgerät überträgt, zunächst ein Schaltsignal detektiert wird, aufgrund dessen die Kommunikationssignale in einer passiven Betriebsweise mit einer geringeren Sendeleistung als in einer aktiven Betriebsweise ausgesandt werden. Gemäß einer ersten Ausführungsvariante wird für jedes Frequenzband separat jeweils ein Schaltsignal detektiert, wobei der Sender für jedes Frequenzband separat abhängig von dem jeweils zugeordneten Schaltsignal in dem passiven Betriebszustand oder in dem aktiven Betriebszustand betrieben wird. Gemäß einer zusätzlichen oder alternativen Ausführungsvariante wird für jede Zeitscheibe separat ein Schaltsignal detektiert, wobei der Sender für jede Zeitscheibe separat abhängig von dem jeweiligen Schaltsignal in dem passiven Betriebszustand oder in dem aktiven Betriebszustand betrieben wird.

Weitere bevorzugte Ausführungsformen des Verfahrens sind gemäß den Ansprüchen 12 bis 19 in Analogie zu den bevorzugten Ausführungsformen des Repeaters vorgesehen. Die für den Repeater genannten Vorteile können hierbei sinngemäß übertragen werden.

Bezüglich der reduzierten Sendeleistung im passiven Betriebszustand ist in einer weiteren bevorzugten Ausführungsform vorgesehen, dass die Sendeleistung in einem ersten Schritt zunächst um etwa 10 - 20 dB gegenüber der aktiven Betriebsweise reduziert wird. Nach einer bestimmten Wartezeit - in der kein Schaltsignal detektiert wird - wird dann die Sendeleistung bis auf das minimale Erkennungssignal reduziert. Vorteilhafterweise kann dabei auch wiederum der Energieverbrauch des Repeaters weitestgehend reduziert werden, da lediglich die "Empfangsseite" des Repeaters eingeschaltet sein muss, wohingegen die "Sendeseite" - nahezu - komplett abgeschaltet sein kann.

Nachfolgend werden Ausführungsbeispiele der Erfindung anhand einer Zeichnung näher erläutert. Darin zeigen:
- Fig. 1: in einer schematischen Darstellung die Funktionsweise eines strahlungsarmen Repeaters, wobei dieser als Multiband-Repeater ausgebildet ist,
- Fig. 2: in Darstellung gemäß Fig. 1 eine zweite Ausführungsform des Repeaters, wobei dieser für ein Zeitmultiplexing eingerichtet ist,
- Fig. 3: in Darstellung gemäß Fig. 1 eine dritte Ausführungsform des Repea- ters, wobei dieser als sogenanntes "Distributed Antenna System" ausgebildet ist.

Einander entsprechende Teile und Größen sind in allen Figuren stets mit den gleichen Bezugszeichen versehen.

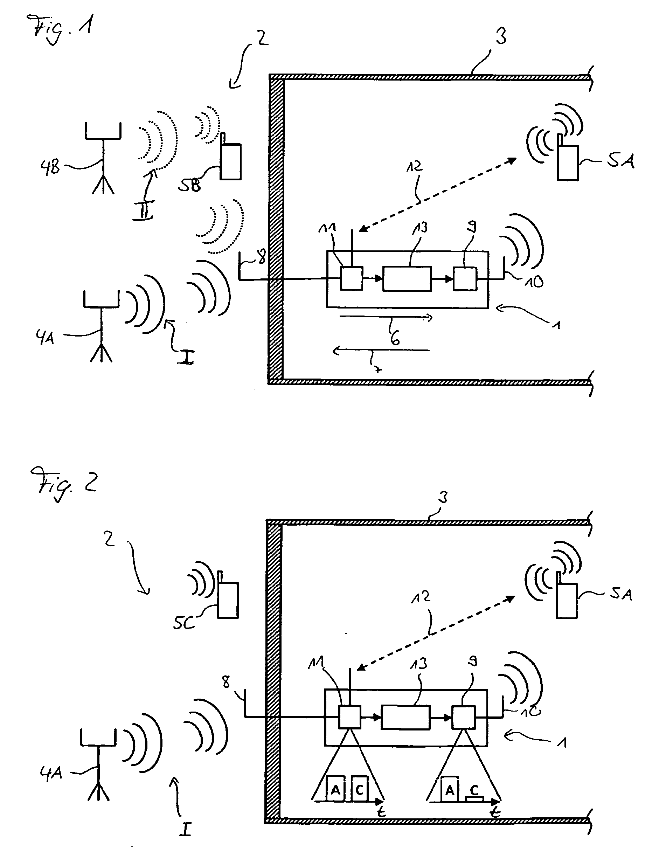

Fig. 1 erläutert in schematisch stark vereinfachter Darstellung die Betriebsweise eines strahlungsarmen Repeaters 1, der innerhalb eines Mobilfunknetzes 2 zur Übertragung von Kommunikationssignalen in ein normalerweise für Funkwellen abgeschattetes (grob angedeutetes) Gebäude 3 dient.

Das Mobilfunknetz 2 umfasst einerseits mehrere - hier dargestellt zwei - Basisstationen 4A bzw. 4B (außerhalb des Gebäudes 3 angeordnet), sowie mehrere - hier dargestellt wiederum zwei - Mobilfunkendgeräte 5A bzw. 5B, die sich innerhalb bzw. außerhalb des Gebäudes 3 befinden.

Innerhalb des Mobilfunknetzes 2 werden die Kommunikationssignale gemäß unterschiedlicher Mobilfunkstandards auf verschiedenen Frequenzbändern übertragen. Beispielhaft gehören hier die erste, in der Darstellung unten angeordnete Basisstation 4A, sowie das erste Mobilfunkendgerät 5A einem ersten Mobilfunkstandard, bspw. GSM 900, entsprechend einem ersten Frequenzband I, an (hier 900 MHz), welches durch durchgezogene Funkwellen gekennzeichnet ist. Die zweite Basisstation 4B (in der Darstellung oben), sowie das zweite Mobilfunkendgerät 5B gehören dagegen einem zweiten Mobilfunkstandard, bspw. UMTS 2100, entsprechend einem zweiten Frequenzband II, an (hier 2100 MHz), welches durch gestrichelt dargestellte Funkwellen gekennzeichnet ist.

In der hier vorliegenden ersten Ausführungsform ist der Repeater 1 als sogenannter Multiband-Repeater ausgebildet, d.h. er ist in der Lage, die Funksignale unterschiedlicher Frequenzbänder I bzw. II zu übertragen.

Dabei empfängt der Repeater 1 Funksignale, die von den Basisstationen 4A bzw. 4B ausgehen und sendet diese gegebenenfalls in einer sogenannten (durch einen Pfeil angedeuteten) Downlink-Richtung 6 innerhalb des Gebäudes 3 aus. Umgekehrt empfängt der Repeater 1 Funksignale, die von einem in dem Gebäude 3 befindlichen Mobilfunkendgerät ausgehen und überträgt diese in einer sogenannten Uplink-Richtung 7 zu einer der Basisstationen 4A bzw. 4B.

Zur Übertragung der Kommunikationssignale in der Downlink-Richtung 6 umfasst der Repeater 1 eine außen am Gebäude 2 angeordnete Antenne 8 zum Empfang der von den Basisstationen 4A bzw. 4B ausgehenden Funksignale. Weiterhin umfasst der Repeater 1 einen Sender 9, durch den das Funksignal (beider Frequenzbänder I, II) gegebenenfalls über eine Antenne 10 im Inneren des Gebäudes 3 ausgestrahlt wird.

Zusätzlich umfasst der Repeater 1 einen Sensor 11, der dazu ausgebildet ist, anhand eines Uplink-Signals eines Mobilfunkendgeräts, beispielsweise anhand eines sogenannten "Location-Update-Signals", die Zugehörigkeit des Mobilfunkendgeräts zu einem bestimmten Mobilfunkstandard bzw. zu einem bestimmten Frequenzband zu identifizieren. Hier dient also das Uplink-Signal eines Mobilfunkendgeräts als Schaltsignal für den Repeater. In dem vorliegenden Beispiel detektiert der Sensor 11 das Mobilfunkendgerät 5A und identifiziert dieses als dem Frequenzband I zugehörig (durch den Doppelpfeil 12 angedeutet).

Der Sensor 11 ist signaltechnisch mit einer Steuereinheit 13 des Repeaters 1 verbunden, die dazu ausgebildet ist, die Sendeleistung des Senders 9 abhängig von dem Signal des Sensors 11 einzustellen. Dabei kann die Sendeleistung einerseits auf einen zur störungsfreien Übertragung von Kommunikationssignalen ausreichend hohen Wert eingestellt werden. Diese Einstellung wird im Folgenden als "aktiver Betriebszustand" bezeichnet. Andererseits ist ein im Folgenden als "passiver Betriebszustand" bezeichneter Betriebszustand einstellbar, in welchem die Sendeleistung auf einen im Vergleich zum aktiven Betriebszustand um 20 dB reduzierten Wert eingestellt wird. In einem "Normalzustand" befindet sich der Sender 9 dabei in dem passiven Betriebszustand und wird nur bei Bedarf in den aktiven Betriebszustand versetzt.

Gemäß dem vorliegenden Beispiel wird also als Schaltsignal das Uplink-Signal mit der Frequenzbandinformation des Mobilfunkgerätes 5A detektiert. Aufgrund dessen versetzt die Steuereinheit 13 den Sender 9 bezüglich des Frequenzbandes I in den aktiven Betriebszustand, während Signale des Frequenzbandes II (kein Uplink-Signal detektiert) nur bei sehr geringer Sendeleistung im Inneren des Gebäudes 3 ausgestrahlt werden. Bezüglich des Frequenzbandes II befindet sich der Sender 9 hier also in dem passiven Betriebszustand.

Diese erste Ausführungsform stellt eine vergleichsweise einfach zu implementierende Möglichkeit dar, einen strahlungsarmen Repeater zu realisieren.

In Fig. 2 ist - wiederum in stark vereinfachter, schematischer Darstellung - die Betriebsweise des Repeaters 1 in einer zweiten Ausführungsform erläutert. In dieser Ausführungsform kann der Repeater 1 entsprechend der ersten Ausführungsform als Multiband-Repeater ausgebildet sein. Insbesondere werden hier die Kommunikationssignale nach einem Zeitmultiplexverfahren übertragen. Dementsprechend werden Kommunikationssignale, die unterschiedlichen Mobilfunkendgeräten desselben Frequenzbandes zugeordnet sind, in zeitlich aufeinanderfolgenden Datenpaketen, in sogenannten Zeitscheiben, übertragen.

In dem hier dargestellten Beispiel befindet sich wiederum das Mobilfunkendgerät 5A im Inneren des Gebäudes 3, während sich ein Mobilfunkendgerät 5C außerhalb des Gebäudes 3 befindet. Im Unterschied zum Beispiel gemäß Fig. 1 gehören hier jedoch beide Mobilfunkendgeräte 5A bzw. 5C demselben Mobilfunkstandard, bspw. GSM 900 mit dem zugehörigen Frequenzband I an.

Im Unterschied zu dem ersten Ausführungsbeispiel werden nicht die Kommunikationssignale beider Mobilfunkendgeräte 5A bzw. 5C (entsprechend ihres gleichen Frequenzbandes I) in das Gebäude 3 übertragen. Hier ist der Sensor 11 nämlich zusätzlich derart als Decoder ausgebildet, dass er einerseits die Anwesenheit eines Mobilfunkendgeräts erkennen kann (wiederum durch den Doppelpfeil 12 gekennzeichnet), andererseits aber auch die Zugehörigkeit der Kommunikationssignale zu dem entsprechenden Mobilfunkendgerät 5A bzw. 5C dekodiert und identifiziert. Hier dient somit zum Einen wiederum das Uplink-Signal als Schaltsignal, zum Anderen sind aber zusätzlich die Kommunikationssignale selbst als Schaltsignal vorgesehen. Wiederum ist dabei der Sender 9 im Normalzustand zunächst im passiven Betriebszustand.

Im vorliegenden Beispiel dekodiert der Sensor 11 die durch den Repeater 1 zu übertragenden Kommunikationssignale und identifiziert dabei die schematisch als Zeitscheibe A angedeuteten Kommunikationssignale als dem im Inneren des Gebäudes 3 befindlichen Mobilfunkendgerät 5A zugehörig. Den Kommunikationssignalen der Zeitscheibe C kann dagegen im Inneren des Gebäudes 3 kein Mobilfunkendgerät zugeordnet werden (kein Uplink-Signal als Schaltsignal vorhanden).

Die Steuereinheit 13 ist hier dazu ausgebildet, den Sender 9 bezüglich einzelner Zeitscheiben A bzw. C - die den einzelnen Mobilfunkendgeräten bzw. Kommunikationssignalen zugeordnet sind - in den aktiven bzw. passiven Betriebszustand zu versetzen. Wie in der Darstellung angedeutet, werden also durch den Sender 9 die Kommunikationssignale der Zeitscheibe A bei voller Sendeleistung ausgestrahlt (Schaltsignal vorhanden, aktiver Betriebszustand), während die Kommunikationssignale der Zeitscheibe C, bei um 20 dB reduzierter Sendeleistung ausgestrahlt werden (kein Schaltsignal vorhanden, passiver Betriebszustand).

Durch diese Ausführungsform des Repeaters 1 kann die elektromagnetische Strahlenbelastung im Inneren des Gebäudes 3 (im Vergleich zu der ersten Ausführungsform) noch weiter reduziert werden.

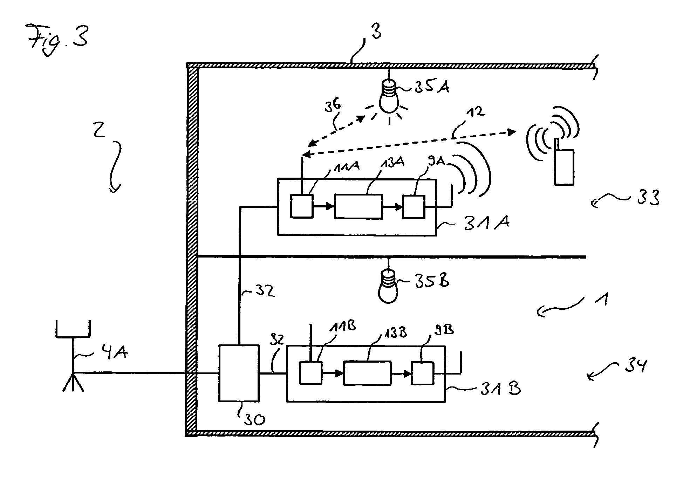

In Fig. 3 wird die Betriebsweise des Repeaters 1 in einer dritten Ausführungsform erläutert. Dabei kann der Repeater 1 generell wiederum gemäß der ersten und /oder der zweiten Ausführungsform ausgebildet sein. Insbesondere ist hier der Repeater 1 jedoch als sogenannter "Distributed Antenna System" (DAS-)Repeater ausgebildet. Dies bedeutet, dass der Repeater 1 hier einerseits eine Mastereinheit 30 umfasst, die - hier leitungsgebunden - mit der Basisstation 4A kommuniziert. Andererseits umfasst der Repeater 1 mehrere - hier dargestellt zwei - Remote-Units 31A bzw. 31 B, die zur Kommunikation mit einem Mobilfunkendgerät ausgebildet sind. Jede der Remote-Units 31A, 31 B ist über ein Glasfaserkabel 32 mit der Mastereinheit 30 signaltechnisch verbunden. In dem hier dargestellten Beispiel ist dabei die erste Remote-Unit 31A in einem ersten Stockwerk 33 des Gebäudes 3 angeordnet, während die zweite Remote-Unit 31 B in einem Erdgeschoss 34 angeordnet ist.

In der vorliegenden Ausführungsform umfasst jede der Remote-Units 31A bzw. 31 B jeweils einen Sensor 11A bzw. 11B, eine Steuereinheit 13A bzw. 13B, sowie einen Sender 9A bzw. 9B. Dabei ist jeder Sensor 11A bzw. 11B, jede Steuereinheit 13A bzw. 13B als auch jeder Sender 9A bzw. 9B analog zu den entsprechenden Komponenten des Repeaters 1 gemäß einer der beiden vorherigen Ausführungsformen ausgebildet.

In dem vorliegenden Beispiel wird das Mobilfunkendgerät 5A, welches sich hier im ersten Stock 33 befindet, von dem Sensor 9A der Remote-Unit 31 A anhand seines Uplink-Signals, welches hier als Schaltsignal dient, detektiert, so dass die zugehörige Steuereinheit 13A das entsprechende Kommunikationssignal über den Sender 9A bei voller Sendeleistung ausstrahlt. Da der Sensor 11 B im Erdgeschoss kein Mobilfunkendgerät detektiert (kein Schaltsignal), wird bzw. bleibt die Sendeleistung des Senders 9B durch die Steuereinheit 13B reduziert. Das bedeutet, der Repeater 1 befindet sich hier bezüglich der Remote-Unit 31A in dem aktiven Betriebszustand, während er sich bezüglich der Remote-Unit 31 B in dem passiven Betriebszustand befindet. Wiederum ist vorgesehen, dass sich die einzelnen Remote-Units 31A bzw. 31B im Normalfall in dem passiven Betriebszustand befinden, und nur bei der Detektion eines Schaltsignals in den aktiven Betriebszustand umgeschaltet werden.

In einer Alternative hierzu ist auch denkbar dass die einzelnen Sensoren 11A bzw. 11B als Helligkeitssensoren ausgebildet sind. In diesem Fall befinden sich die Sender 9A bzw. 9B bei Helligkeit im aktiven Betriebszustand, während sie bei Dunkelheit in den passiven Betriebszustand versetzt sind. Dies ist beispielhaft durch die Lampen 35A im ersten Stockwerk 33 und 35B im Erdgeschoss verdeutlicht. In diesem Fall detektiert der Sensor 11A entsprechend der eingeschalteten Lampe 35A eine Helligkeit als Schaltsignal (angedeutet durch den Doppelpfeil 36), worauf die Steuereinheit 13A den Sender 9A in den aktiven Betriebszustand versetzt. Im Erdgeschoss wird aufgrund der ausgeschalteten Lampe 35B kein Schaltsignal detektiert, so dass der Sender 9B solange im passiven Betriebszustand betrieben wird, bis auch hier ein Schaltsignal - eine Helligkeit - detektiert wird.

Durch die in Fig. 3 dargestellte Ausführungsform kann die Strahlenbelastung für einzelne Gebäudeteile bedarfsgerecht angepasst und somit insgesamt reduziert werden.

Die hier dargestellten Ausführungsformen sind beispielhaft gewählt. Andere Kombinationen von unterschiedlich ausgebildeten Repeatern mit den unterschiedlichen Schaltsignalen sind selbstverständlich auch denkbar.

### Bezugszeichenliste

- 1: Repeater
- 2: Mobilfunknetz
- 3: Gebäude
- 4A, 4B: Basisstation
- 5A, 5B, 5C: Mobilfunkendgerät
- 6: Downlink-Richtung
- 7: Uplink-Richtung
- 8: Antenne
- 9, 9A, 9B: Sender
- 10, 10A, 10B: Antenne
- 11, 11A, 11B: Sensor
- 12: Doppelpfeil
- 13, 13A, 13B: Steuereinheit
- 30: Mastereinheit
- 31 A, 31 B: Remote-Unit
- 32: Glasfaserkabel
- 33: Erdgeschoss
- 34: Stockwerk
- 35A, 35B: Lampe
- 36: Doppelpfeil

- A, C: Zeitscheibe
- I, II: Frequenzband

## Patentansprüche

1. Repeater (1) zur Übertragung von Kommunikationssignalen zwischen einer Basisstation (4A) und einem Netzendgerät (5A) eines Funkübertragungsnetzes (2), insbesondere eines Mobilfunknetzes, ausgebildet als Multiband-Repeater zur Übertragung von Kommunikationssignalen unterschiedlicher Frequenzbänder (I, II),
- mit einem Sender (9), der dazu eingerichtet ist, die Kommunikationssignale zu dem Netzendgerät (5A) auszusenden,
- mit einem Sensor (11) zur Detektion eines Schaltsignals,
- sowie mit einer Steuereinheit (13), die dazu ausgebildet ist, den Sender (9) abhängig von dem Schaltsignal zwischen einem passiven und einem aktiven Betriebszustand umzuschalten, wobei seine Sendeleistung in dem passiven Betriebszustand geringer als in dem aktiven Betriebszustand ist,
**dadurch gekennzeichnet, dass** der Sensor (11) dazu ausgebildet ist, für jedes Frequenzband (I, II) separat jeweils ein Schaltsignal zu detektieren, wobei die Steuereinheit (13) dazu ausgebildet ist, den Sender (9) abhängig von dem jeweiligen Schaltsignal für jedes Frequenzband (I, II) separat zwischen dem passiven und dem aktiven Betriebszustand umzuschalten.

2. Repeater (1) nach Anspruch 1,
**dadurch gekennzeichnet, dass** er zur Übertragung von Kommunikationssignalen nach einem Zeitmultiplexverfahren in zeitlich sequentiell aufeinanderfolgenden Zeitscheiben (A, C) eingerichtet ist, und dass der Sensor (11) dazu ausgebildet ist, für einzelne Zeitscheiben (A, C) separat jeweils ein Schaltsignal zu detektieren, wobei die Steuereinheit (13) dazu ausgebildet ist, den Sender (9) abhängig von dem jeweiligen Schaltsignal für einzelne Zeitscheiben (A, C) separat umzuschalten.

3. Repeater (1) nach Anspruch 1 oder 2,
**dadurch gekennzeichnet, dass**
der Sensor (11) dazu ausgebildet ist, ein Funksignal, insbesondere ein von dem Netzendgerät (5A) ausgehendes Uplink-Signal, als Schaltsignal zu detektieren.

4. Repeater (1) nach einem der Ansprüche 1 bis 3,
**dadurch gekennzeichnet, dass**
der Sensor (11) als ein Decoder ausgebildet ist, welcher dazu eingerichtet ist, die zwischen der Basisstation (4A) und dem Netzendgerät (5A bzw. 5C) ausgetauschten Kommunikationssignale als Schaltsignal zu detektieren.

5. Repeater (1) nach einem der Ansprüche 1 bis 4,
**dadurch gekennzeichnet, dass**
der Sensor (11) zur Detektion einer Lichtintensität, eines akustischen Signals, einer Bewegung, einer Beschleunigung oder einer Position ausgebildet ist.

6. Repeater (1) nach einem der Ansprüche 1 bis 5, mit einer Mastereinheit (30), sowie mit mehreren, jeweils mit der Mastereinheit (30) kommunizierenden Remote-Units (31 A, 31 B),
**dadurch gekennzeichnet, dass**
jede Remote-Unit (31 A, 31 B) jeweils einen Sensor (11A, 11 B) zur Detektion eines Schaltsignals, sowie jeweils einen Sender (9A, 9B) zur Übertragung der Kommunikationssignale umfasst, wobei die Steuereinheit (13) dazu ausgebildet ist, jeden Sender (9A, 9B) abhängig von dem jeweiligen Schaltsignal separat zwischen dem passiven Betriebszustand und dem aktiven Betriebszustand umzuschalten.

7. Repeater (1) nach einem der Ansprüche 1 bis 6, der als TDD-Repeater zur asymmetrischen, zeitlich wechselweisen Übertragung der Kommunikationssignale in einer Uplink-Richtung (7) von dem Netzendgerät (5A) zur Basisstation (4A) und in einer Downlink-Richtung (6) von der Basisstation (4A) zu dem Netzendgerät (5A) ausgebildet ist,
**dadurch gekennzeichnet, dass**
die Steuereinheit (13) dazu ausgebildet ist, den Sender (9) nach dem Umschalten in den aktiven Betriebszustand erst nach einer Haltezeit wieder in den passiven Betriebszustand zu versetzen.

8. Repeater (1) nach einem der Ansprüche 1 bis 7,
**dadurch gekennzeichnet, dass**
die Steuereinheit (13) dazu ausgebildet ist, den Sender (9) im passiven Betriebszustand bei einer um etwa 10-20 dB gegenüber dem aktiven Betriebszustand reduzierten Sendeleistung zu betreiben.

9. Repeater (1) nach einem der Ansprüche 1 bis 8,
**dadurch gekennzeichnet, dass**
die Steuereinheit (13) dazu ausgebildet ist, den Sender (9) im passiven Betriebszustand bei einer Sendeleistung zu betreiben, die bis auf ein zur Erkennung ausreichendes, minimales Sendesignal reduziert ist.

10. Repeater (1) nach einem der Ansprüche 1 bis 9, welcher zur Übertragung von Kommunikationssignalen in einen Innenraum, insbesondere in ein Gebäude (3) oder ein Verkehrsmittel, eingesetzt ist.

11. Verfahren zum Betrieb eines Repeaters (1) für ein Funkübertragungsnetz (2) mit einem Sender (9) zur Übertragung von Kommunikationssignalen von einer Basisstation (4A) an ein Netzendgerät (5A),
- wobei der Repeater (1) als ein Multiband-Repeater Kommunikationssignale unterschiedlicher Frequenzbänder (I, II) überträgt,
- wobei ein Schaltsignal detektiert wird,
- wobei der Sender abhängig von dem Schaltsignal entweder in einem aktiven Betriebszustand oder in einem passiven Betriebszustand betrieben wird, und
- wobei die Kommunikationssignale in dem passiven Betriebszustand mit einer geringeren Sendeleistung als in dem aktiven Betriebszustand ausgesandt werden,
**dadurch gekennzeichnet, dass** für jedes Frequenzband (I, II) separat jeweils ein Schaltsignal detektiert wird, wobei der Sender (9) für jedes Frequenzband (I, II) separat abhängig von dem jeweils zugeordneten Schaltsignal in dem passiven Betriebszustand oder in dem aktiven Betriebszustand betrieben wird.

12. Verfahren nach Anspruch 11,
**dadurch gekennzeichnet, dass** der Repeater (1) die Kommunikationssignale nach einem Zeitmultiplexverfahren in zeitlich sequentiell aufeinanderfolgenden Zeitscheiben (A, C) überträgt, und dass für jede Zeitscheibe (A, C) separat ein Schaltsignal detektiert wird, wobei der Sender (9) für jede Zeitscheibe (A, C) separat abhängig von dem jeweiligen Schaltsignal in dem passiven Betriebszustand oder in dem aktiven Betriebszustand betrieben wird.

13. Verfahren nach Anspruch 11 oder 12,
**dadurch gekennzeichnet, dass** abhängig von einem Funksignal als Schaltsignal, insbesondere von einem von dem Netzendgerät (5A) ausgehenden Uplink-Signal, der Sender (9) in dem aktiven oder dem passiven Betriebszustand betrieben wird.

14. Verfahren nach einem der Ansprüche 11 bis 13,
**dadurch gekennzeichnet, dass** abhängig von den zwischen der Basisstation (4A) und dem Netzendgerät (5A bzw. 5C) ausgetauschten Kommunikationssignalen als Schaltsignal der Sender (9) in dem aktiven oder dem passiven Betriebszustand betrieben wird.

15. Verfahren nach einem der Ansprüche 11 bis 14,
**dadurch gekennzeichnet, dass** abhängig von einer Lichtintensität, einem akustischen Signal, einer Bewegung, einer Beschleunigung oder einer Position als Schaltsignal der Sender (9) in dem aktiven oder dem passiven Betriebszustand betrieben wird.

16. Verfahren nach einem der Ansprüche 11 bis 15,
**dadurch gekennzeichnet, dass** der Repeater (1) die Kommunikationssignale nach einem asymmetrischen TDD-Verfahren zeitlich wechselweise in einer Uplink-Richtung (7) von dem Netzendgerät (5A) zur Basisstation (4A) und in einer Downlink-Richtung (6) von der Basisstation (4A) zu dem Netzendgerät (5A) überträgt, wobei der Sender (9) nach einem aktiven Betriebszustand erst nach einer Haltezeit wieder in dem passiven Betriebszustand betrieben wird.

17. Verfahren nach einem der Ansprüche 11 bis 16,
**dadurch gekennzeichnet, dass** der Sender (9) im passiven Betriebszustand mit einer um etwa 10-20 dB gegenüber dem aktiven Betriebszustand reduzierten Sendeleistung betrieben wird.

18. Verfahren nach einem der Ansprüche 11 bis 17,
**dadurch gekennzeichnet, dass** der Sender (9) im passiven Betriebszustand mit einer minimalen, zur Erkennung ausreichenden, Sendeleistung betrieben wird.

19. Verfahren nach den Ansprüchen 17 und 18,
**dadurch gekennzeichnet, dass** in dem passiven Betriebszustand die Sendeleistung zunächst um etwa 10 bis 20 dB reduziert wird, wobei nach einer bestimmten Wartezeit - in der kein Schaltsignal detektiert wird - die Sendeleistung bis auf die minimale Sendeleistung reduziert wird.

## Claims

1. Repeater (1) for transmitting communication signals between a base station (4A) and a network terminal (5A) in a radio transmission network (2), particularly a mobile radio network, in the form of a multiband repeater for transmitting communication signals on different frequency bands (I, II),
- having a transmitter (9) which is set up to transmit the communication signals to the network terminal (5A),
- having a sensor (11) for detecting a switching signal,
- and also having a control unit (13) which is designed to change over the transmitter (9) between a passive operating state and an active operating state on the basis of the switching signal, the transmission power of said transmitter being lower in the passive operating state than in the active operating state,
**characterized in that** the sensor (11) is designed to detect a respective switching signal for each frequency band (I, II) separately, wherein the control unit (13) is designed to change over the transmitter (9) between the passive operating state and the active operating state on the basis of the respective switching signal for each frequency band (I, II) separately.

2. Repeater (1) according to Claim 1,
**characterized in that**
it is set up for transmitting communication signals according to a time-division multiplexing method in temporally sequentially successive time slices (A, C), and **in that** the sensor (11) is designed to detect a respective switching signal for individual time slices (A, C) separately, wherein the control unit (13) is designed to change over the transmitter (9) depending on the respective switching signal for individual time slices (A, C) separately.

3. Repeater (1) according to Claim 1 or 2,
**characterized in that**
the sensor (11) is designed to detect a radio signal, particularly an uplink signal coming from the network terminal (5A), as a switching signal.

4. Repeater (1) according to one of Claims 1 to 3,
**characterized in that**
the sensor (11) is in the form of a decoder which is set up to detect the communication signals interchanged between the base station (4A) and the network terminal (5A or 5C) as a switching signal.

5. Repeater (1) according to one of Claims 1 to 4,
**characterized in that**
the sensor (11) is designed for detecting a light intensity, an audible signal, a movement, an acceleration or a position.

6. Repeater (1) according to one of Claims 1 to 5, having a master unit (30) and also having a plurality of remote units (31A, 31B) which each communicate with the master unit (30),
**characterized in that**
each remote unit (31A, 31B) comprises a respective sensor (11A, 11B) for detecting a switching signal and a respective transmitter (9A, 9B) for transmitting the communication signals, wherein the control unit (13) is designed to change over each transmitter (9A, 9B) between the passive operating state and the active operating state on the basis of the respective switching signal separately.

7. Repeater (1) according to one of Claims 1 to 6, which is in the form of a TDD repeater for the asymmetric transmission, at alternate times, of the communication signals in an uplink direction (7) from the network terminal (5A) to the base station (4A) and in a downlink direction (6) from the base station (4A) to the network terminal (5A),
**characterized in that**
the control unit (13) is designed to put the transmitter (9) back into the passive operating state after changeover to the active operating state only after a hold time.

8. Repeater (1) according to one of Claims 1 to 7,
**characterized in that**
the control unit (13) is designed to operate the transmitter (9) in the passive operating state at a transmission power which is reduced by approximately 10-20 dB in comparison with the active operating state.

9. Repeater (1) according to one of Claims 1 to 8,
**characterized in that** the control unit (13) is designed to operate the transmitter (9) in the passive operating state at a transmission power which is reduced down to a minimal transmission signal which is adequate for recognition.

10. Repeater (1) according to one of Claims 1 to 9, which is used for transmitting communication signals to an interior, particularly to a building (3) or a means of transport.

11. Method for operating a repeater (1) for a radio transmission network (2) having a transmitter (9) for transmitting communication signals from a base station (4A) to a network terminal (5A),
- wherein the repeater (1) as a multiband repeater transmits communication signals on different frequency bands (I, II),
- wherein a switching signal is detected,
- wherein the transmitter is operated either in an active operating state or in a passive operating state on the basis of the switching signal, and
- wherein the communication signals are transmitted at a lower transmission power in the passive operating state than in the active operating state,
**characterized in that**
a respective switching signal is detected for each frequency band (I, II) separately, wherein the transmitter (9) is operated in the passive operating state or in the active operating state on the basis of the respectively associated switching signal for each frequency band (I, II) separately.

12. Method according to Claim 11,
**characterized in that**
the repeater (1) transmits the communication signals according to a time-division multiplexing method in temporally sequentially successive time slices (A, C) and **in that** a switching signal is detected for each time slice (A, C) separately, wherein the transmitter (9) is operated in the passive operating state or in the active operating state depending on the respective switching signal for each time slice (A, C) separately.

13. Method according to Claim 11 or 12,
**characterized in that**
the transmitter (9) is operated in the active operating state or the passive operating state on the basis of a radio signal as a switching signal, particularly on the basis of an uplink signal coming from the network terminal (5A)

14. Method according to one of Claims 11 to 13,
**characterized in that**
the transmitter (9) is operated in the active operating state or the passive operating state on the basis of the communication signals interchanged between the base station (4A) and the network terminal (5A or 5C) as a switching signal.

15. Method according to one of Claims 11 to 14,
**characterized in that**
the transmitter (9) is operated in the active operating state or the passive operating state on the basis of a light intensity, an audible signal, a movement, an acceleration or a position as a switching signal.

16. Method according to one of Claims 11 to 15,
**characterized in that**
a repeater (1) transmits the communication signals using an asymmetric TDD method at alternate times in an uplink direction (7) from the network terminal (5A) to the base station (4A) and in a downlink direction (6) from the base station (4A) to the network terminal (5A), wherein the transmitter (9) is operated in the passive operating state again after an active operating state only after a hold time.

17. Method according to one of Claims 11 to 16,
**characterized in that**
the transmitter (9) is operated in a passive operating state at a transmission power which is reduced by approximately 10-20 dB in comparison with the active operating state.

18. Method according to one of Claims 11 to 17,
**characterized in that**
the transmitter (9) is operated in the passive operating state at a minimal transmission power which is adequate for recognition.

19. Method according to Claims 17 and 18,
**characterized in that**
the transmission power is first of all reduced by approximately 10 to 20 dB in the passive operating state, wherein after a particular waiting time - in which no switching signals are detected - the transmission power is reduced down to the minimal transmission power.

## Revendications

1. Répéteur (1) destiné à transmettre des signaux de communication entre un poste de base (4A) et un terminal (5A) d'un réseau (2) de transmission radio, en particulier d'un réseau de radiotéléphonie mobile, configuré comme répéteur multibande destiné à transmettre des signaux de communication dans différentes bandes de fréquences (I, II), le répéteur présentant :
un émetteur (9) conçu pour envoyer des signaux de communication au terminal réseau (5A),
un détecteur (11) qui détecte un signal de commutation et
une unité de commande (13) configurée pour commuter l'émetteur (9) entre un état de fonctionnement passif et un état de fonctionnement actif en fonction du signal de commutation, la puissance d'émission de l'émetteur étant plus basse dans l'état de fonctionnement passif que dans l'état de fonctionnement actif,
**caractérisé en ce que**
le détecteur (11) est configuré pour détecter séparément un signal de commutation dans chaque bande de fréquences (I, II) et
**en ce que** l'unité de commande (13) est configurée pour commuter l'émetteur (9) entre l'état de fonctionnement passif et l'état de fonctionnement actif séparément en fonction des signaux de commutation respectifs de chaque bande de fréquences (I, II).

2. Répéteur (1) selon la revendication 1, **caractérisé en ce qu'**il est conçu pour transmettre des signaux de communication par un procédé de multiplexage dans le temps dans des fenêtres temporelles (A, C) successives et **en ce que** le détecteur (11) est configuré pour détecter séparément un signal de communication dans les différentes fenêtres temporelles (A, C), l'unité de commande (13) étant configurée pour commuter séparément l'émetteur (9) en fonction des signaux de communication respectifs de chaque fenêtre temporelles (A, C).

3. Répéteur (1) selon les revendications 1 ou 2, **caractérisé en ce que** le détecteur (11) est configuré pour détecter comme signal de commutation un signal radio, en particulier un signal montant partant du terminal réseau (5A).

4. Répéteur (1) selon l'une des revendications 1 à 3, **caractérisé en ce que** le détecteur (11) est configuré comme décodeur conçu pour détecter comme signal de commutation des signaux de communication échangés entre le poste de base (4A) et les terminaux réseau (5A ou 5C).

5. Répéteur (1) selon l'une des revendications 1 à 4, **caractérisé en ce que** le détecteur (11) est configuré pour détecter une intensité lumineuse, un signal acoustique, un déplacement, une accélération ou une position.

6. Répéteur (1) selon l'une des revendications 1 à 5, doté d'une unité maître (30) ainsi que de plusieurs unités distantes (31A, 31B) qui communiquent chacune avec l'unité maître (30) et **caractérisé en ce que** chaque unité distante (31A, 31B) comporte un détecteur (11A, 11B) qui détecte un signal de commutation ainsi qu'un émetteur (9A, 9B) qui transmet les signaux de communication, l'unité de commande (13) étant configurée pour commuter séparément chaque émetteur (9A, 9B) entre l'état de fonctionnement passif et l'état de fonctionnement actif en fonction du signal de commutation respectif.

7. Répéteur (1) selon l'une des revendications 1 à 6, configuré comme répéteur TDD assurant une transmission asymétrique et alternée dans le temps des signaux de communication dans une direction montante (7) depuis le terminal réseau (5A) jusqu'au poste de base (4A) et dans une direction descendante (6) depuis le poste de base (4A) jusqu'au terminal réseau (5A), **caractérisé en ce que** l'unité de commande (13) est configurée pour ne ramener dans l'état de fonctionnement passif l'émetteur (9) qu'après un temps de maintien après l'avoir commuté dans l'état de fonctionnement actif.

8. Répéteur (1) selon l'une des revendications 1 à 7, **caractérisé en ce que** l'unité de commande (13) est configurée pour utiliser l'émetteur (9) dans l'état de fonctionnement passif à une puissance d'émission réduite d'environ 10 à 20 dB par rapport à l'état de fonctionnement actif.

9. Répéteur (1) selon l'une des revendications 1 à 8, **caractérisé en ce que** l'unité de commande (13) est configurée pour utiliser l'émetteur (9) dans l'état de fonctionnement passif à une puissance d'émission réduite au signal d'émission minimum qui suffit pour assurer sa détection.

10. Répéteur (1) selon l'une des revendications 1 à 9, utilisé pour transmettre des signaux de communication dans une espace intérieur, en particulier dans un bâtiment (3) ou un moyen de transport.

11. Procédé d'utilisation d'un répéteur (1) prévu pour un réseau (2) de transmission radio qui présente un émetteur (9) qui transmet des signaux de communication d'un poste de base (4A) à un terminal réseau (5A),
le répéteur (1) étant un répéteur multibande qui transmet des signaux de communication dans différentes bandes de fréquences (I, II),
un signal de commutation étant détecté,
l'émetteur étant utilisé dans un état de fonctionnement actif ou dans un état de fonctionnement passif en fonction du signal de commutation et
les signaux de communication étant émis à une puissance plus basse dans l'état de fonctionnement passif que dans l'état de fonctionnement actif, **caractérisé en ce que**
pour chaque bande de fréquence (I, II), un signal de commutation distinct est détecté, l'émetteur (9) étant utilisé dans l'état de fonctionnement passif ou dans l'état de fonctionnement actif séparément pour chaque bande de fréquence (I, II), en fonction du signal de commutation respectif associé.

12. Procédé selon la revendication 11, **caractérisé en ce que** le répéteur (1) transmet les signaux de communication par un procédé de multiplexage dans le temps dans des fenêtres temporelles (A, C) successives, **en ce qu'**un signal de communication distinct est détecté pour chaque fenêtre temporelle (A, C) et **en ce que** l'émetteur (9) est utilisé dans l'état de fonctionnement passif ou dans l'état de fonctionnement actif séparément pour chaque fenêtre temporelle (A, C) en fonction du signal de commutation respectif.

13. Procédé selon les revendications 11 ou 12, **caractérisé en ce que** l'émetteur (9) est utilisé dans l'état de fonctionnement actif ou dans l'état de fonctionnement passif en fonction d'un signal de commutation formé d'un signal radio et en particulier d'un signal montant qui provient du terminal réseau (5A).

14. Procédé selon l'une des revendications 11 à 13, **caractérisé en ce que** l'émetteur (9) est utilisé dans l'état de fonctionnement actif ou dans l'état de fonctionnement passif en fonction d'un signal de commutation constitué des signaux de commutation échangés entre le poste de base (4A) et le terminal réseau (5A ou 5C).

15. Procédé selon l'une des revendications 11 à 14, **caractérisé en ce que** l'émetteur (9) est utilisé dans l'état de fonctionnement actif ou dans l'état de fonctionnement passif en fonction d'un signal de commutation constitué d'une intensité lumineuse, d'un signal acoustique, d'un déplacement, d'une accélération ou d'une position.

16. Procédé selon l'une des revendications 11 à 15, **caractérisé en ce que** le répéteur (1) transmet les signaux de commutation par un procédé TDD asymétrique et en alternance dans le temps dans une direction montante (7) du terminal réseau (5A) au poste de base (4A) et dans une direction descendante (6) du poste de base (4A) au terminal réseau (5A), l'émetteur (9) n'étant réutilisé dans l'état de fonctionnement passif qu'après un temps de maintien après avoir été placé dans l'état de fonctionnement actif.

17. Procédé selon l'une des revendications 11 à 16, **caractérisé en ce que** dans l'état de fonctionnement passif, l'émetteur (9) est utilisé à une puissance d'émission réduite d'environ 10 à 20 dB par rapport à l'état de fonctionnement actif.

18. Procédé selon l'une des revendications 11 à 17, **caractérisé en ce que** dans l'état de fonctionnement passif, l'émetteur (9) est utilisé à la puissance d'émission minimale qui suffit pour assurer sa détection.

19. Procédé selon les revendications 17 et 18, **caractérisé en ce que** dans l'état de fonctionnement passif, la puissance d'émission est d'abord réduite d'environ 10 à 20 dB et **en ce que** la puissance d'émission est réduite jusqu'à la puissance d'émission minimale après un temps d'attente défini au cours duquel aucun signal de commutation n'a été détecté.
